# EUROPEAN PATENT APPLICATION

(11) **EP 4 180 836 A1**
(43) Date of publication of application: **17.05.2023**
(21) Application number: 22204730.0
(22) Date of filing: 31.10.2022
(51) Int. Cl.: G01S 7/48, G01S 7/52, G01S 7/539, G01S 15/42, G01S 15/86, G01S 15/931, G01S 17/89, G01S 17/931

(54) **SYSTEM AND METHOD FOR ULTRASONIC SENSOR ENHANCEMENT USING LIDAR POINT CLOUD**

(30) Priority: 10.11.2021 US 202163277678 P; 25.10.2022 US 202217972820
(71) Applicant: VOLVO CAR CORPORATION, 405 31 Göteborg (SE)
(72) Inventor: LI, Ying, 405 31 GÖTEBORG (SE); LIU, Zhipeng, 405 31 GÖTEBORG (SE); DING, Sihao, 405 31 GÖTEBORG (SE)
(74) Representative: Kransell & Wennborg KB

(57) **Abstract**

A system and method for ultrasonic sensor (USS) reading enhancement using a lidar point cloud. This provides noise reduction and enables the generation of a 2D environmental map. More specifically, the present disclosure provides a system and method for generating an enhanced environmental map using USSs, and the map is enhanced using a lidar point cloud. Using the lidar point cloud has advantages because the lidar point cloud is accurate and thus can provide accurate labels for training and the like.

## Description

### TECHNICAL FIELD

The present disclosure relates generally to the automotive field. More particularly, the present disclosure relates to a system and method for ultrasonic sensor enhancement using a lidar point cloud.

### BACKGROUND

In general, ultrasonic sensor (USS) readings are noisy and low resolution. They are one-dimensional (1D) and cannot describe small structures in the environment. Since the readings from a USS are distance, using them directly does not provide a map of the environment and point positions cannot be obtained. The present background provides an illustrative automotive context in which the concepts and principles of the present disclosure may be implemented. It will be readily apparent to those of ordinary skill in the art that the concepts and principles of the present disclosure may be implemented in other contexts equally.

### SUMMARY

The present disclosure provides a system and method for USS reading enhancement using a lidar point cloud. This provides noise reduction and enables the generation of a two-dimensional (2D) environmental map. More specifically, the present disclosure provides a system and method for generating an enhanced environmental map using USSs, and the map is enhanced using a lidar point cloud. Using the lidar point cloud has advantages because the lidar point cloud is accurate and thus can provide accurate labels for training and the like.

In one illustrative embodiment, the present disclosure provides a method for ultrasonic sensor reading enhancement using a lidar point cloud, the method including: receiving an ultrasonic sensor temporal feature using an ultrasonic sensor; inputting the ultrasonic sensor temporal feature into an autoencoder system including instructions stored in a memory and executed by a processor; wherein the autoencoder system is trained using a prior inputted ultrasonic sensor temporal feature and a corresponding prior inputted lidar feature label received from a lidar system; and, using the trained autoencoder system, outputting an enhanced ultrasonic sensor environmental mapping. The ultrasonic sensor temporal feature includes a 1D environmental map with relatively more noise and the enhanced ultrasonic sensor environmental mapping includes a 2D environmental map with relatively less noise. The prior inputted ultrasonic sensor temporal feature is formed by performing ultrasonic sensor data feature extraction using inertial measurement unit data across N frames and a kinematic bicycle model to generate an ego vehicle trajectory, and, for each position in the ego vehicle trajectory, calculating a reflection point in an environment based on a yaw angle and each ultrasonic sensor reading, thereby providing one environmental mapping across the N frames for the ego vehicle trajectory. The data feature extraction further includes, for a trajectory cut based on an ultrasonic sensor's field of view, using the environmental mapping from one ultrasonic sensor, as well as a same mapping from the lidar system. The prior inputted lidar feature label is formed by performing lidar point cloud feature generation by filtering lidar points by height and by a field of view of an ultrasonic sensor. The lidar point cloud feature generation further includes finding closest lidar points to an ego vehicle by splitting the field of view of the ultrasonic sensor into angles centered at the ultrasonic sensor and, within each angle, selecting a constant number of lidar points that are closest to the ego vehicle, wherein a third dimension of the selected points is discarded, thereby providing a the lidar feature with a total number of the selected points that matches the inputted ultrasonic sensor temporal feature. The method also includes, at a vehicle control system, receiving the outputted an enhanced ultrasonic sensor environmental mapping and directing operation of a vehicle based on the outputted an enhanced ultrasonic sensor environmental mapping.

In another illustrative embodiment, the present disclosure provides a non-transitory computer-readable medium including instructions stored in a memory and executed by a processor to carry out steps for ultrasonic sensor reading enhancement using a lidar point cloud, the steps including: receiving an ultrasonic sensor temporal feature using an ultrasonic sensor; inputting the ultrasonic sensor temporal feature into an autoencoder system including instructions stored in a memory and executed by a processor; wherein the autoencoder system is trained using a prior inputted ultrasonic sensor temporal feature and a corresponding prior inputted lidar feature label received from a lidar system; and, using the trained autoencoder system, outputting an enhanced ultrasonic sensor environmental mapping. The ultrasonic sensor temporal feature includes a 1D environmental map with relatively more noise and the enhanced ultrasonic sensor environmental mapping includes a 2D environmental map with relatively less noise. The prior inputted ultrasonic sensor temporal feature is formed by performing ultrasonic sensor data feature extraction using inertial measurement unit data across N frames and a kinematic bicycle model to generate an ego vehicle trajectory, and, for each position in the ego vehicle trajectory, calculating a reflection point in an environment based on a yaw angle and each ultrasonic sensor reading, thereby providing one environmental mapping across the N frames for the ego vehicle trajectory. The data feature extraction further includes, for a trajectory cut based on an ultrasonic sensor's field of view, using the environmental mapping from one ultrasonic sensor, as well as a same mapping from the lidar system. The prior inputted lidar feature label is formed by performing lidar point cloud feature generation by filtering lidar points by height and by a field of view of an ultrasonic sensor. The lidar point cloud feature generation further includes finding closest lidar points to an ego vehicle by splitting the field of view of the ultrasonic sensor into angles centered at the ultrasonic sensor and, within each angle, selecting a constant number of lidar points that are closest to the ego vehicle, wherein a third dimension of the selected points is discarded, thereby providing a the lidar feature with a total number of the selected points that matches the inputted ultrasonic sensor temporal feature.

In a further illustrative embodiment, the present disclosure provides a system for ultrasonic sensor reading enhancement using a lidar point cloud, the system including: an ultrasonic sensor operable for generating an ultrasonic sensor temporal feature; and an autoencoder system including instructions stored in a memory and executed by a processor, the autoencoder system operable for receiving the ultrasonic sensor temporal feature from the ultrasonic sensor and outputting an enhanced ultrasonic sensor environmental mapping; wherein the autoencoder system is trained using a prior inputted ultrasonic sensor temporal feature and a corresponding prior inputted lidar feature label generated by a lidar system. The ultrasonic sensor temporal feature includes a 1D environmental map with relatively more noise and the enhanced ultrasonic sensor environmental mapping includes a 2D environmental map with relatively less noise. The prior inputted ultrasonic sensor temporal feature is formed by performing ultrasonic sensor data feature extraction using inertial measurement unit data across N frames and a kinematic bicycle model to generate an ego vehicle trajectory, and, for each position in the ego vehicle trajectory, calculating a reflection point in an environment based on a yaw angle and each ultrasonic sensor reading, thereby providing one environmental mapping across the N frames for the ego vehicle trajectory. The data feature extraction further includes, for a trajectory cut based on an ultrasonic sensor's field of view, using the environmental mapping from one ultrasonic sensor, as well as a same mapping from the lidar system. The prior inputted lidar feature label is formed by performing lidar point cloud feature generation by filtering lidar points by height and by a field of view of an ultrasonic sensor. The lidar point cloud feature generation further includes finding closest lidar points to an ego vehicle by splitting the field of view of the ultrasonic sensor into angles centered at the ultrasonic sensor and, within each angle, selecting a constant number of lidar points that are closest to the ego vehicle, wherein a third dimension of the selected points is discarded, thereby providing a the lidar feature with a total number of the selected points that matches the inputted ultrasonic sensor temporal feature. The system also includes a vehicle control system operable for receiving the outputted an enhanced ultrasonic sensor environmental mapping and directing operation of a vehicle based on the outputted an enhanced ultrasonic sensor environmental mapping.

### BRIEF DESCRIPTION OF THE DRAWINGS

The present disclosure is illustrated and described herein with reference to the various drawings, in which:
FIG. 1 is a schematic diagram of one illustrative embodiment of the USS lidar point cloud enhancement system and method of the present disclosure;
FIG. 2 is another schematic diagram of one illustrative embodiment of the USS lidar point cloud enhancement system and method of the present disclosure;
FIG. 3 illustrates USS data feature extraction in accordance with the USS lidar point cloud enhancement system and method of the present disclosure;
FIG. 4 further illustrates USS data feature extraction in accordance with the USS lidar point cloud enhancement system and method of the present disclosure;
FIG. 5 illustrates lidar point cloud feature generation in accordance with the USS lidar point cloud enhancement system and method of the present disclosure;
FIG. 6 further illustrates lidar point cloud feature generation in accordance with the USS lidar point cloud enhancement system and method of the present disclosure;
FIG. 7 is a network diagram of a cloud-based system for implementing the various systems and methods of the present disclosure;
FIG. 8 is a block diagram of a server/processing system that may be used in the cloud-based system of FIG. 7 or stand-alone; and
FIG. 9 is a block diagram of a remote device that may be used in the cloud-based system of FIG. 7 or stand-alone.

### DETAILED DESCRIPTION

Again, the present disclosure provides a system and method for USS reading enhancement using a lidar point cloud. This provides noise reduction and enables the generation of a 2D environmental map. More specifically, the present disclosure provides a system and method for generating an enhanced environmental map using USSs, and the map is enhanced using a lidar point cloud. Using the lidar point cloud has advantages because the lidar point cloud is accurate and thus can provide accurate labels for training and the like.

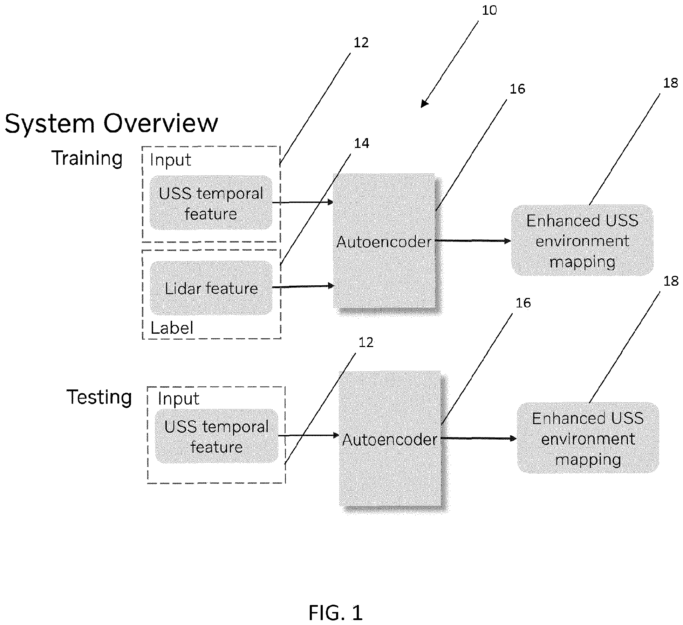

FIG. 1 is a schematic diagram of one illustrative embodiment of the USS lidar point cloud enhancement system and method 10 of the present disclosure. The training aspect includes a USS temporal feature 12 and a labeled lidar feature 14 input to an autoencoder 16 to provide an enhanced USS environmental mapping 18. The testing aspect includes a USS temporal feature 12 input to the trained autoencoder 16 to provide an enhanced USS environmental mapping 18. Thus, the trained autoencoder 16, after training using inputted USS temporal features 12 and corresponding labeled lidar features 14, is operable for, given a subsequently inputted USS temporal feature 12, outputting an enhanced USS environmental mapping 18, which is a map generated using a USS that is a noise-reduced 2D environmental map.

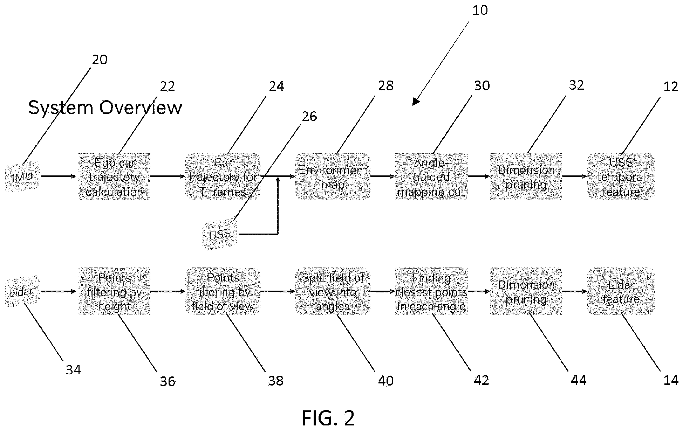

FIG. 2 is another schematic diagram of one illustrative embodiment of the USS lidar point cloud enhancement system and method 10 of the present disclosure. Here, an inertial measurement unit (IMU) 20 provides an ego vehicle trajectory calculation 22 including a vehicle trajectory for T frames 24. Methodologies for such ego vehicle trajectory calculation 22 are well known to those of ordinary skill in the art. USS data 26 is provided from which an environmental map 28 is determined. Again, methodologies for the generation of such environmental map 28 are well known to those of ordinary skill in the art. An angle-guided mapping cut 30 is performed, as well as dimension pruning 32 to determine the USS temporal feature 12. On the lidar side, a lidar unit 34 provides corresponding points that are filtered by height 36 and field of view (FoV) 38. Methodologies for such height and FoV filtering 36,38 are well known to those of ordinary skill in the art. The FoV is then split into angles and the closest points are found in each angle 42. After dimension pruning 44, the corresponding lidar feature 14 is determined and provided.

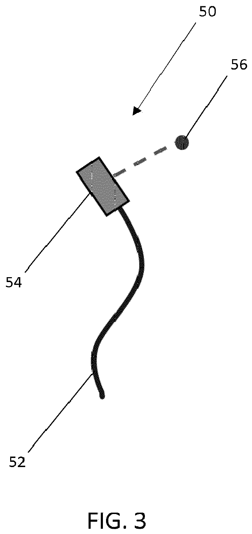

FIG. 3 illustrates USS data feature extraction 50 in accordance with the USS lidar point cloud enhancement system and method 10 (FIGS. 1 and 2) of the present disclosure. In terms of generation of the trajectory 52 of the ego vehicle 54 using the IMU 20 (FIG. 2), based on the IMU data across N frames, a kinematic bicycle model is used to generate the ego vehicle trajectories 52. At each timestamp, the past N frames are used. In terms of environmental mapping based on the USS readings, for each position in the ego vehicle trajectory 52, the reflection point 56 in the environment is calculated based on the yaw angle and the USS readings. As illustrated, the dot is this point in the environmental mapping. For each position in the vehicle trajectory 52, such a point 56 may be calculated. Then one mapping across N frames is obtained from one trajectory 52.

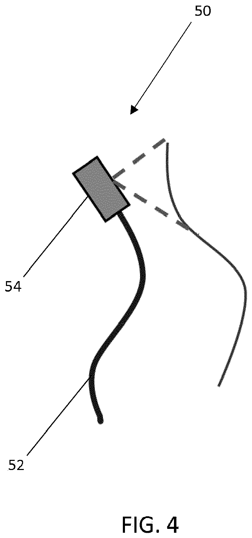

FIG. 4 further illustrates USS data feature extraction 50 in accordance with the USS lidar point cloud enhancement system and method 10 (FIGS. 1 and 2) of the present disclosure. For the trajectory cut based on the sensor's FoV, the environmental mapping from one USS 26 (FIG. 2) is used, as well as the same mapping from the lidar 34 (FIG. 2). It is only necessary to use the mapping within the FoV of the USS 26, and these points are cut. Since the speed of the vehicle 54 changes while driving, the number of points within the FoV may change. In order to keep the input feature dimension fixed, the cut mapping is padded with (-1,-1) if the length of the points is smaller than the predefined dimension. Otherwise, the points that exceed the dimension are discarded.

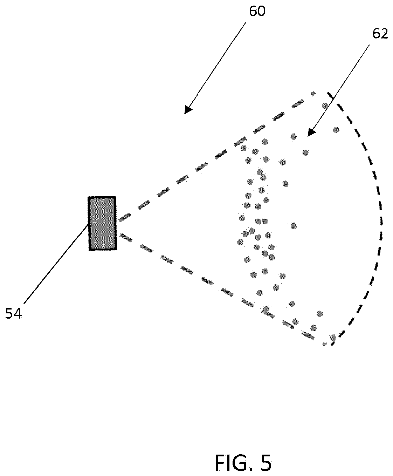

FIG. 5 illustrates lidar point cloud feature generation 60 in accordance with the USS lidar point cloud enhancement system and method 10 (FIGS. 1 and 2) of the present disclosure. The lidar points 62 are filtered by height. The lidar points 62 are three-dimensional (3D) data that may include ground and tree leaves above the vehicle, for example. Those points 62 can be filtered out that are lower than the ego vehicle's body or higher than the ego vehicle's roof, for example. The lidar points 62 remaining are those that represent obstacles to the vehicle's body. The lidar points 62 are also filtered by the USS's FoV. Since the lidar points 62 will be used as labels for the USS features 12 (FIGS. 1 and 2), they should match the same FoV. Those lidar points 62 that fall outside the USS's FoV are thus filtered out.

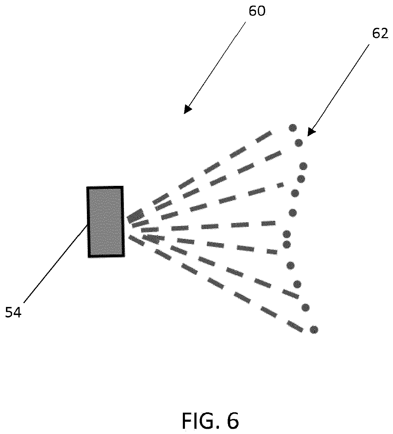

FIG. 6 further illustrates lidar point cloud feature generation 60 in accordance with the USS lidar point cloud enhancement system and method 10 (FIGS. 1 and 2) of the present disclosure. The closest lidar points 62 to the ego vehicle 54 are found by splitting the USS's FoV into small angles centered at the USS 26 (FIG. 2). Within each angle, a constant number of lidar points 62 are selected that are closest to the ego vehicle 54. The third dimension (pointing from the ground to the sky) of the selected points 62 is discarded. If there is no lidar point 62 or less points 62 are found, they are padded with (-1,-1) points. The selected lidar points 62 form the lidar feature 14 (FIGS. 1 and 2). The total number of the selected points 62 matches the USS input feature 12 (FIGS. 1 and 2).

An autoencoder with supervised learning is used to learn the mapping between USS features 12 and lidar features 14 (FIGS. 1 and 2). For the (-1,-1) points in the lidar labels, since the output will be learned towards the label, they are masked with 0 during the loss calculation. In this way, the meaningful points contribute more to the results during training. The USS feature 12 is used as input. The lidar feature 14 is used as a label. Both serve to map the environment in the enhanced USS environment mapping 18 (FIG. 1).

It is to be recognized that, depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially. It should be noted that the algorithms of the present disclosure may be implemented on an embedded processing system running a real time operating system (OS), which provides an assured degree of availability and low latency. As discussed below, processing in a cloud system may also be implemented if such availability and latency problems are addressed.

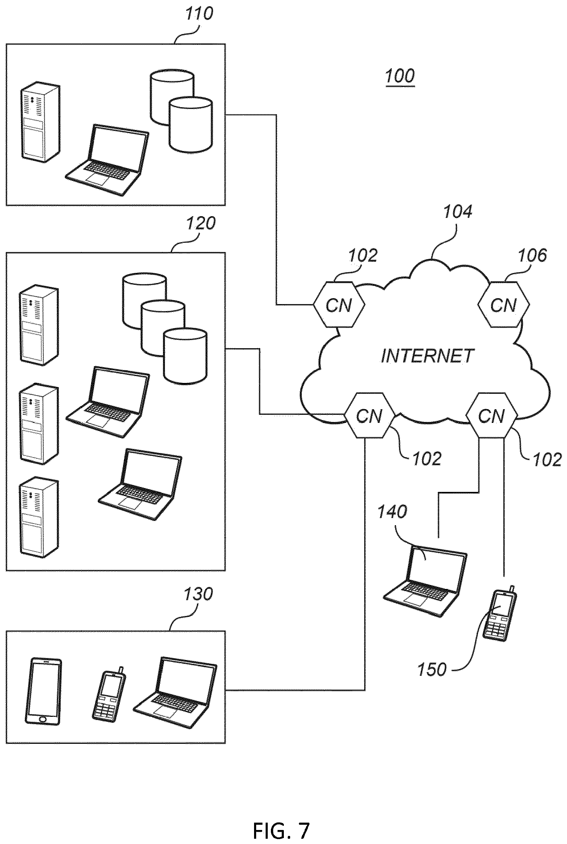

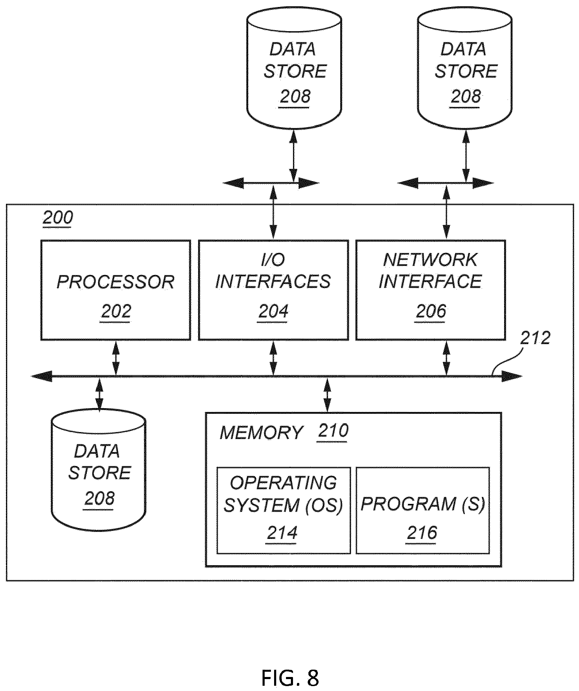

FIG. 7 is a network diagram of a cloud-based system 100 for implementing various cloud-based services of the present disclosure, where applicable. The cloud-based system 100 includes one or more cloud nodes (CNs) 102 communicatively coupled to the Internet 104 or the like. The cloud nodes 102 may be implemented as a server or other processing system 200 (as illustrated in FIG. 8) or the like and can be geographically diverse from one another, such as located at various data centers around the country or globe. Further, the cloud-based system 100 can include one or more central authority (CA) nodes 106, which similarly can be implemented as the server 200 and be connected to the CNs 102. For illustration purposes, the cloud-based system 100 can connect to a regional office 110, headquarters 120, various individual's homes 130, laptops/desktops 140, and mobile devices 150, each of which can be communicatively coupled to one of the CNs 102. These locations 110, 120, and 130, and devices 140 and 150 are shown for illustrative purposes, and those skilled in the art will recognize there are various access scenarios to the cloud-based system 100, all of which are contemplated herein. The devices 140 and 150 can be so-called road warriors, i.e., users off-site, on-the-road, etc. The cloud-based system 100 can be a private cloud, a public cloud, a combination of a private cloud and a public cloud (hybrid cloud), or the like.

Again, the cloud-based system 100 can provide any functionality through services, such as software-as-a-service (SaaS), platform-as-a-service, infrastructure-as-a-service, security-as-a-service, Virtual Network Functions (VNFs) in a Network Functions Virtualization (NFV) Infrastructure (NFVI), etc. to the locations 110, 120, and 130 and devices 140 and 150. Previously, the Information Technology (IT) deployment model included enterprise resources and applications stored within an enterprise network (i.e., physical devices), behind a firewall, accessible by employees on site or remote via Virtual Private Networks (VPNs), etc. The cloud-based system 100 is replacing the conventional deployment model. The cloud-based system 100 can be used to implement these services in the cloud without requiring the physical devices and management thereof by enterprise IT administrators.

Cloud computing systems and methods abstract away physical servers, storage, networking, etc., and instead offer these as on-demand and elastic resources. The National Institute of Standards and Technology (NIST) provides a concise and specific definition which states cloud computing is a model for enabling convenient, on-demand network access to a shared pool of configurable computing resources (e.g., networks, servers, storage, applications, and services) that can be rapidly provisioned and released with minimal management effort or service provider interaction. Cloud computing differs from the classic client-server model by providing applications from a server that are executed and managed by a client's web browser or the like, with no installed client version of an application required. Centralization gives cloud service providers complete control over the versions of the browser-based and other applications provided to clients, which removes the need for version upgrades or license management on individual client computing devices. The phrase "software as a service" is sometimes used to describe application programs offered through cloud computing. A common shorthand for a provided cloud computing service (or even an aggregation of all existing cloud services) is "the cloud." The cloud-based system 100 is illustrated herein as one example embodiment of a cloud-based system, and those of ordinary skill in the art will recognize the systems and methods described herein are not necessarily limited thereby.

FIG. 8 is a block diagram of a server or other processing system 200, which may be used in the cloud-based system 100 (FIG. 7), in other systems, or stand-alone, such as in the vehicle itself. For example, the CNs 102 (FIG. 7) and the central authority nodes 106 (FIG. 7) may be formed as one or more of the servers 200. The server 200 may be a digital computer that, in terms of hardware architecture, generally includes a processor 202, input/output (I/O) interfaces 204, a network interface 206, a data store 208, and memory 210. It should be appreciated by those of ordinary skill in the art that FIG. 8 depicts the server or other processing system 200 in an oversimplified manner, and a practical embodiment may include additional components and suitably configured processing logic to support known or conventional operating features that are not described in detail herein. The components (202, 204, 206, 208, and 210) are communicatively coupled via a local interface 212. The local interface 212 may be, for example, but is not limited to, one or more buses or other wired or wireless connections, as is known in the art. The local interface 212 may have additional elements, which are omitted for simplicity, such as controllers, buffers (caches), drivers, repeaters, and receivers, among many others, to enable communications. Further, the local interface 212 may include address, control, and/or data connections to enable appropriate communications among the aforementioned components.

The processor 202 is a hardware device for executing software instructions. The processor 202 may be any custom made or commercially available processor, a central processing unit (CPU), an auxiliary processor among several processors associated with the server 200, a semiconductor-based microprocessor (in the form of a microchip or chipset), or generally any device for executing software instructions. When the server 200 is in operation, the processor 202 is configured to execute software stored within the memory 210, to communicate data to and from the memory 210, and to generally control operations of the server 200 pursuant to the software instructions. The I/O interfaces 204 may be used to receive user input from and/or for providing system output to one or more devices or components.

The network interface 206 may be used to enable the server 200 to communicate on a network, such as the Internet 104 (FIG. 7). The network interface 206 may include, for example, an Ethernet card or adapter (e.g., 10BaseT, Fast Ethernet, Gigabit Ethernet, or 10GbE) or a Wireless Local Area Network (WLAN) card or adapter (e.g., 802.1 la/b/g/n/ac). The network interface 206 may include address, control, and/or data connections to enable appropriate communications on the network. A data store 208 may be used to store data. The data store 208 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 208 may incorporate electronic, magnetic, optical, and/or other types of storage media. In one example, the data store 208 may be located internal to the server 200, such as, for example, an internal hard drive connected to the local interface 212 in the server 200. Additionally, in another embodiment, the data store 208 may be located external to the server 200 such as, for example, an external hard drive connected to the I/O interfaces 204 (e.g., a SCSI or USB connection). In a further embodiment, the data store 208 may be connected to the server 200 through a network, such as, for example, a network-attached file server.

The memory 210 may include any of volatile memory elements (e.g., random access memory (RAM, such as DRAM, SRAM, SDRAM, etc.)), nonvolatile memory elements (e.g., ROM, hard drive, tape, CDROM, etc.), and combinations thereof. Moreover, the memory 210 may incorporate electronic, magnetic, optical, and/or other types of storage media. Note that the memory 210 may have a distributed architecture, where various components are situated remotely from one another but can be accessed by the processor 202. The software in memory 210 may include one or more software programs, each of which includes an ordered listing of executable instructions for implementing logical functions. The software in the memory 210 includes a suitable operating system (O/S) 214 and one or more programs 216. The operating system 214 essentially controls the execution of other computer programs, such as the one or more programs 216, and provides scheduling, input-output control, file and data management, memory management, and communication control and related services. The one or more programs 216 may be configured to implement the various processes, algorithms, methods, techniques, etc. described herein.

It will be appreciated that some embodiments described herein may include one or more generic or specialized processors ("one or more processors") such as microprocessors; central processing units (CPUs); digital signal processors (DSPs); customized processors such as network processors (NPs) or network processing units (NPUs), graphics processing units (GPUs), or the like; field programmable gate arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more application-specific integrated circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable medium having computer-readable code stored thereon for programming a computer, server, appliance, device, processor, circuit, etc. each of which may include a processor to perform functions as described and claimed herein. Examples of such computer-readable mediums include, but are not limited to, a hard disk, an optical storage device, a magnetic storage device, a Read-Only Memory (ROM), a Programmable Read-Only Memory (PROM), an Erasable Programmable Read-Only Memory (EPROM), an Electrically Erasable Programmable Read-Only Memory (EEPROM), flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

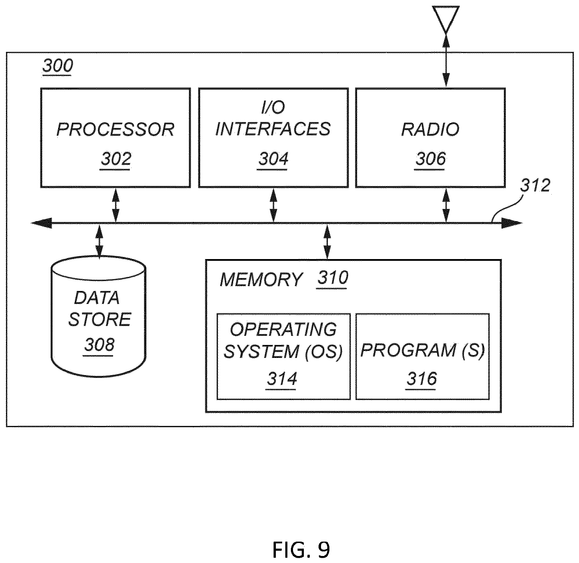

FIG. 9 is a block diagram of a user device 300, which may be used in the cloud-based system 100 (FIG. 7), as part of a network, or stand-alone. The user device 300 can be a vehicle, a smartphone, a tablet, a smartwatch, an Internet of Things (IoT) device, a laptop, a virtual reality (VR) headset, etc. The user device 300 can be a digital device that, in terms of hardware architecture, generally includes a processor 302, I/O interfaces 304, a radio 306, a data store 308, and memory 310. It should be appreciated by those of ordinary skill in the art that FIG. 9 depicts the user device 300 in an oversimplified manner, and a practical embodiment may include additional components and suitably configured processing logic to support known or conventional operating features that are not described in detail herein. The components (302, 304, 306, 308, and 310) are communicatively coupled via a local interface 312. The local interface 312 can be, for example, but is not limited to, one or more buses or other wired or wireless connections, as is known in the art. The local interface 312 can have additional elements, which are omitted for simplicity, such as controllers, buffers (caches), drivers, repeaters, and receivers, among many others, to enable communications. Further, the local interface 312 may include address, control, and/or data connections to enable appropriate communications among the aforementioned components.

The processor 302 is a hardware device for executing software instructions. The processor 302 can be any custom made or commercially available processor, a CPU, an auxiliary processor among several processors associated with the user device 300, a semiconductor-based microprocessor (in the form of a microchip or chipset), or generally any device for executing software instructions. When the user device 300 is in operation, the processor 302 is configured to execute software stored within the memory 310, to communicate data to and from the memory 310, and to generally control operations of the user device 300 pursuant to the software instructions. In an embodiment, the processor 302 may include a mobile optimized processor such as optimized for power consumption and mobile applications. The I/O interfaces 304 can be used to receive user input from and/or for providing system output. User input can be provided via, for example, a keypad, a touch screen, a scroll ball, a scroll bar, buttons, a barcode scanner, and the like. System output can be provided via a display device such as a liquid crystal display (LCD), touch screen, and the like.

The radio 306 enables wireless communication to an external access device or network. Any number of suitable wireless data communication protocols, techniques, or methodologies can be supported by the radio 306, including any protocols for wireless communication. The data store 308 may be used to store data. The data store 308 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 308 may incorporate electronic, magnetic, optical, and/or other types of storage media.

Again, the memory 310 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 310 may incorporate electronic, magnetic, optical, and/or other types of storage media. Note that the memory 310 may have a distributed architecture, where various components are situated remotely from one another, but can be accessed by the processor 302. The software in memory 310 can include one or more software programs, each of which includes an ordered listing of executable instructions for implementing logical functions. In the example of FIG. 9, the software in the memory 310 includes a suitable operating system 314 and programs 316. The operating system 314 essentially controls the execution of other computer programs and provides scheduling, input-output control, file and data management, memory management, and communication control and related services. The programs 316 may include various applications, add-ons, etc. configured to provide end user functionality with the user device 300. For example, example programs 316 may include, but not limited to, a web browser, social networking applications, streaming media applications, games, mapping and location applications, electronic mail applications, financial applications, and the like. In a typical example, the end-user typically uses one or more of the programs 316 along with a network, such as the cloud-based system 100 (FIG. 7).

Although the present disclosure is illustrated and described herein with reference to illustrative embodiments and specific examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following non-limiting claims for all purposes.

## Claims

1. A method (10) for ultrasonic sensor reading enhancement using a lidar point cloud, the method comprising:
receiving an ultrasonic sensor temporal feature (12) using an ultrasonic sensor;
inputting the ultrasonic sensor temporal feature into an autoencoder system comprising instructions stored in a memory and executed by a processor;
wherein the autoencoder system is trained using a prior inputted ultrasonic sensor temporal feature and a corresponding prior inputted lidar feature (14) label received from a lidar system; and
using the trained autoencoder system, outputting an enhanced ultrasonic sensor environmental mapping (18).

2. The method of claim 1, wherein the ultrasonic sensor temporal feature comprises a 1D environmental map with relatively more noise and the enhanced ultrasonic sensor environmental mapping comprises a 2D environmental map with relatively less noise.

3. The method of claim 1, wherein the prior inputted ultrasonic sensor temporal feature is formed by performing ultrasonic sensor data feature extraction using inertial measurement unit data across N frames and a kinematic bicycle model to generate an ego vehicle trajectory, and, for each position in the ego vehicle trajectory, calculating a reflection point in an environment based on a yaw angle and each ultrasonic sensor reading, thereby providing one environmental mapping across the N frames for the ego vehicle trajectory.

4. The method of claim 3, wherein the data feature extraction further comprises, for a trajectory cut based on an ultrasonic sensor's field of view, using the environmental mapping from one ultrasonic sensor, as well as a same mapping from the lidar system.

5. The method of claim 1, wherein the prior inputted lidar feature label is formed by performing lidar point cloud feature generation by filtering lidar points by height and by a field of view of an ultrasonic sensor.

6. The method of claim 5, wherein the lidar point cloud feature generation further comprises finding closest lidar points to an ego vehicle by splitting the field of view of the ultrasonic sensor into angles centered at the ultrasonic sensor and, within each angle, selecting a constant number of lidar points that are closest to the ego vehicle, wherein a third dimension of the selected points is discarded, thereby providing a the lidar feature with a total number of the selected points that matches the inputted ultrasonic sensor temporal feature.

7. The method of claim 1, further comprising, at a vehicle control system, receiving the outputted an enhanced ultrasonic sensor environmental mapping and directing operation of a vehicle based on the outputted an enhanced ultrasonic sensor environmental mapping.

8. A non-transitory computer-readable medium comprising instructions stored in a memory and executed by a processor to carry out steps for ultrasonic sensor reading enhancement using a lidar point cloud, the steps comprising:
receiving an ultrasonic sensor temporal feature using an ultrasonic sensor;
inputting the ultrasonic sensor temporal feature into an autoencoder system comprising instructions stored in a memory and executed by a processor;
wherein the autoencoder system is trained using a prior inputted ultrasonic sensor temporal feature and a corresponding prior inputted lidar feature label received from a lidar system; and
using the trained autoencoder system, outputting an enhanced ultrasonic sensor environmental mapping.

9. A system for ultrasonic sensor reading enhancement using a lidar point cloud, the system comprising:
an ultrasonic sensor operable for generating an ultrasonic sensor temporal feature; and
an autoencoder system comprising instructions stored in a memory and executed by a processor, the autoencoder system operable for receiving the ultrasonic sensor temporal feature from the ultrasonic sensor and outputting an enhanced ultrasonic sensor environmental mapping;
wherein the autoencoder system is trained using a prior inputted ultrasonic sensor temporal feature and a corresponding prior inputted lidar feature label generated by a lidar system.

10. The system of claim 9, wherein the ultrasonic sensor temporal feature comprises a 1D environmental map with relatively more noise and the enhanced ultrasonic sensor environmental mapping comprises a 2D environmental map with relatively less noise.

11. The system of claim 9, wherein the prior inputted ultrasonic sensor temporal feature is formed by performing ultrasonic sensor data feature extraction using inertial measurement unit data across N frames and a kinematic bicycle model to generate an ego vehicle trajectory, and, for each position in the ego vehicle trajectory, calculating a reflection point in an environment based on a yaw angle and each ultrasonic sensor reading, thereby providing one environmental mapping across the N frames for the ego vehicle trajectory.

12. The system of claim 11, wherein the data feature extraction further comprises, for a trajectory cut based on an ultrasonic sensor's field of view, using the environmental mapping from one ultrasonic sensor, as well as a same mapping from the lidar system.

13. The system of claim 9, wherein the prior inputted lidar feature label is formed by performing lidar point cloud feature generation by filtering lidar points by height and by a field of view of an ultrasonic sensor.

14. The system of claim 13, wherein the lidar point cloud feature generation further comprises finding closest lidar points to an ego vehicle by splitting the field of view of the ultrasonic sensor into angles centered at the ultrasonic sensor and, within each angle, selecting a constant number of lidar points that are closest to the ego vehicle, wherein a third dimension of the selected points is discarded, thereby providing a the lidar feature with a total number of the selected points that matches the inputted ultrasonic sensor temporal feature.

15. The system of claim 9, further comprising a vehicle control system operable for receiving the outputted an enhanced ultrasonic sensor environmental mapping and directing operation of a vehicle based on the outputted an enhanced ultrasonic sensor environmental mapping.
